# EUROPEAN PATENT SPECIFICATION

(11) **EP 2 158 083 B1**
(45) Date of publication and mention of the grant of the patent: **11.09.2013**
(21) Application number: 07797920.1
(22) Date of filing: 31.05.2007
(51) Int. Cl.: B32B 27/24, C09J 5/02

(54) **TIRE REPAIR WITH CURED PATCH**
REIFENREPARATUR MIT EINEM AUSGEHÄRTETEN PATCH
RÉPARATION DE PNEU AVEC PASTILLE DURCIE

(43) Date of publication of application: 03.03.2010
(73) Proprietor: Compagnie Générale des Etablissements Michelin, 63000 Clermont-Ferrand (FR); Michelin Recherche et Technique S.A., 1763 Granges-Paccot (CH)
(72) Inventor: BAILEY, Rodney, R., Simpsonville, SC 29681 (US)
(74) Representative: Neugebauer, Jürgen
(86) International application number: PCT/US2007/070068
(87) International publication number: WO 2008/147413

(56) References cited:
- US-A- 4 399 854
- US-A- 4 409 056
- US-A- 4 434 832
- US-A- 4 647 328
- US-A1- 2004 149 382
- US-B1- 6 328 840
- US-B1- 6 546 982
- US-B1- 6 774 172

## Description

### BACKGROUND OF THE INVENTION

### Field of the Invention

This invention relates generally to elastomer repairs and more particularly, to repairing rubber articles by applying a patch using a rubber-based adhesive.

### Description of the Related Art

Tire repair is an important part of maintaining the performance and value of modern tires, especially truck tires and off the road tires. The materials that are typically used to repair tires include rubber compounds, reinforced and non-reinforced rubber patches, rubber plugs, cements, cold vulcanizing fluids, chemical cleaners and sealers.

Reinforced tire repair patches are known to consist typically of cured layers of rubber compounds, reinforcements and a thin layer of uncured rubber for bonding to the inner liner of the tire. Reinforced tire patches are also known to have no thin layer of uncured rubber for bonding to the inner layer of the tire. Such a patch is disclosed, for example, in U.S. Patent No. 4,618,519, which discloses a cured patch having a thin layer of treating agent that is then applied to a repair area of a tire having an amine curable polymer or prepolymer layer for bonding. A tire repair patch for application to a surface of a tire at an injured portion and a method of making such tire repair patch is also disclosed in U.S. Patent No. 4,399,854.

The reinforced patch is typically applied to the inner liner of a tire after preparing the damaged area of a tire. The preparation consists of several steps that include, for example, inspection of the damaged area of the tire, removal of material from and cleaning of the damaged area, cementing the hole, filling the hole with a rubber composition, surface preparation of the inner liner, application of a rubber cement, drying, application of the patch, stitching of the patch and curing of the patch.

Also known are electronic patches that contain electronic components to measure tire operating conditions. These electronic patches are typically bonded to the inner layer of a tire using methods and materials that are similar to those used for bonding reinforced tire repair patches to the inner liner of a tire.

### SUMMARY OF THE INVENTION

The present invention provides methods and articles utilizing a bonding material comprising ultra-accelerators and solvent-swollen diene rubber. Particular embodiments include a method for bonding surfaces of vulcanized diene rubber components. The method includes the steps of applying a bonding material having the solvent-swollen diene rubber and one or more ultra-accelerators to a surface of a first vulcanized rubber component and positioning a surface of a second vulcanized rubber component to oppose the surface of the first vulcanized rubber component with the bonding material between the opposing surfaces. The method further includes the step of bonding the opposing surfaces through the bonding material therebetween.

Particular embodiments of the method for bonding vulcanized diene rubber components further a patch having a vulcanized diene rubber bonding surface as the first component and a tire having an interior surface as the second component. Such embodiments may provide that the bonding surface of the patch is bonded to the interior surface of the tire through the bonding material therebetween.

Particular embodiments of the present invention further include a pneumatic tire having a patch bonded to an interior surface of the tire by the methods described above. Such patches may include electronics for monitoring a condition of the tire.

The foregoing and other objects, features and advantages of the invention will be apparent from the following more detailed descriptions of particular embodiments of the invention.

### DETAILED DESCRIPTION OF PARTICULAR EMBODIMENTS

The present invention provides bonding materials for bonding vulcanized diene rubber components, particular embodiments of which include bonding materials having solvent-swollen diene rubber mixed with ultra accelerators, methods for their making and their use and articles that include vulcanized rubber components bonded by such bonding materials.

Examples of useful activities that include bonding vulcanized diene rubber components include repairing a vulcanized diene rubber article by applying a vulcanized diene rubber patch to a damaged area, retreading a tire by bonding a tread to a tire carcass, manufacturing laminated articles that include layers of vulcanized diene rubber components and other similar activities.

Embodiments of the present invention include such bonding of components that are made of vulcanized rubber compositions. The rubber elastomers that are suitable for use in embodiments of the present invention, both as vulcanized components having surfaces to be bonded together as well as the solvent-swollen diene rubber component of the bonding material, are understood to be those elastomers resulting at least in part, *i.e.,* a homopolymer or a copolymer, from diene monomers, *i.e*., monomers having two double carbon-carbon bonds, whether conjugated or not.

Particular embodiments of the present invention utilize essentially unsaturated diene elastomers, which is understood herein to mean diene elastomers resulting at least in part from conjugated diene monomers, having a content of member or units of diene origin (conjugated dienes) that is greater than 15 mol. %. Within this category of essentially unsaturated diene elastomers, highly unsaturated diene elastomers is understood to mean herein diene elastomers having a content of units of diene origin (conjugated diene) that is greater than 50 mol. %.

Diene elastomers that are not essentially unsaturated elastomers as defined above are diene elastomers that may be described as being essentially saturated diene elastomers. These essentially saturated diene elastomers have low or very low content of units of diene origin, *i.e.,* less than 15 mol. %. Examples of such elastomers include butyl rubbers or copolymers of dienes and of alpha-olefins of the EPDM type.

While it is required that the bonding material include solvent-swollen essentially unsaturated diene rubber (which includes highly unsaturated diene rubbers), one or both of the surfaces to be bonded may be of an essentially unsaturated diene rubber, an essentially saturated diene rubber or combinations thereof. The surfaces to be bonded may further include polymers other than elastomers such as, for example thermoplastic polymers.

Examples of suitable dienes include polybutadienes, polyisoprenes, natural rubber, butadiene copolymers, isoprene copolymers and mixtures thereof. Suitable copolymers include, for example, butadiene-styrene copolymers, butadiene-isoprene copolymers, isoprene-styrene copolymers, isoprene-butadiene-styrene copolymers.

Particular embodiments of the present invention useful as the bonding material may comprise, for example, between 80 and 100 phr natural rubber and between 0 and 20 phr synthetic rubber. The synthetic rubber may be typically selected, for example, from polybutadiene, styrene-butadiene rubber or combinations thereof. A suitable diene rubber is one that swells in the solvent.

As noted above, particular embodiments of the present invention include a solvent-swollen diene rubber component. The diene rubber is made solvent-swollen by mixing the diene rubber in a solvent until the solvent is absorbed into the diene rubber, resulting in the solvent-swollen diene rubber component of the bonding material.

Any solvent that can swell the diene rubber but that does not attack or react chemically with the diene rubber is suitable for given applications. The solvent may be, for example, an aliphatic solvent of between 4 and 10 carbons or may be selected from cyclic alkane solvents or aromatic solvents or combinations thereof. Examples of suitable solvents may include, for example, benzene, cyclohexane, toluene, xylene, hexane, heptane and acetone or combinations thereof. Mixtures of suitable solvents may be used in particular embodiments of the invention. Particular embodiments of the present invention include a solvent or mixtures of solvents with sufficiently high volatility such that most of the solvent is evaporated from the boding material between about 5 and 30 minutes or in other embodiments, between about 10 and 20 minutes of applying the bonding material to the surfaces to be bonded. Particular embodiments of the present invention include a solvent or mixture of solvent having a vapor pressure at 20 °C of between 0 and 30 kPa or in other embodiments of between 0 and 5 kPa or yet in other embodiments of between 0 and 1 kPa.

Particular embodiments of the present invention include an amount of solvent used to swell the diene rubber sufficient to provide a bonding material having a consistency similar to that of common rubber cement. Other consistencies may be useful but if more viscous, the material is more difficult to spread over the bonding surface and if less viscous, the waiting time for the solvent to evaporate may be excessive. As such, particular embodiments of the bonding material flow at room temperature much like syrup. This consistency is suitable for spreading the bonding material over the surface to be bonded with, for example, a brush, stick or spatula.

Such consistency may be achieved in particular embodiments of the bonding material by having a solvent content, for example, of between 80 and 98 wt. % or in other embodiments, of between 85 and 95 wt. % based on the total weight of the bonding material. Particular embodiments include, for example, a solids content (diene rubber plus ultra-accelerators and accelerators plus activators plus tackifiers) of between 2 and 20 wt. % or in other embodiments, of between 5 and 15 wt. % based on the total weight of the solvent and the solids content.

In addition to the solvent-swollen diene rubber component, particular embodiments of the bonding material further include an accelerator package that includes ultra accelerators, accelerators or combinations thereof. Surprisingly, just the addition of the accelerator package to the solvent-swollen diene rubber component, without sulfur, sulfur donors or any other crosslinking agent that is capable of vulcanizing the bonding material alone, provides the bonding material that strongly bonds opposing surfaces of vulcanized diene rubber having the bonding material therebetween. The accelerator package includes one or more ultra-accelerators and optionally may include one or more accelerators.

Accelerators are well known by those having ordinary skill in the art and may be classified according to the effect they have on cure time. One classification of accelerators, as shown in Table **1**, is disclosed in *Rubber Technology,* edited by Maurice Morton, Chapter 2, "The Compounding and Vulcanization of Rubber," 3rd edition, 1987.

**Table 1- Relative Vulcanization Activity of Accelerators**

| **Type** | **Time at 284 °F** | **Examples** |
|---|---|---|
| Slow | 90-120 minutes | Aniline |
| Moderately fast | ∼ 60 minutes | Diphenylguanidine Hexamethylene tetramine |
| Fast | ~ 30 minutes | Mercaptobenzothiazole Benzothiazyl disulfide |
| Ultra-accelerators | Several minutes | Thiurams, Dithiocarbamates, Xanthates |

Suitable vulcanization ultra-accelerators include, but are not limited to, thiurams, xanthates, dithiocarbamates, dithiophosphates, and combinations thereof. More specifically, these include, but are not limited to: tetramethylthiuram disulfide (TMTD), zinc isopropyl xanthate (ZIPX), zinc dibenzyldithiocarbamate (ZBEC), zinc ethylphenydithiocarbamate (ZEPC), tetrabenzylthiuram disulfide (TBzTD), and di-isopropyl xanthogen polysulfide (available as AS 100, a Robac Chemicals product). One or more of the ultra-accelerators may be added to the bonding material composition.

Suitable vulcanization accelerators include, but are not limited to, thiazoles, sulphenamides, guanidines, thiourea derivatives, amine derivatives, and combinations thereof. Examples of these include, but are not limited to: N-cyclohexyl-2-benzothiazyl sulfenamide (CBS), dibenzylamine (DBA), N-N'-diphenylguanidine (DPG), Dicyclohexylamine (DCHA), 2-mercaptobenzothiozyl disulfide (MBTS).

Particular embodiments of the bonding compound include, for example, between 0.1 and 10 phr or in other embodiments, of between 0.2 and 8 phr of an ultra-accelerator. Particular embodiments may further include between about 0.2 and 5 phr or in other embodiments, of between 0.4 and 3 phr of an accelerator to enhance the performance of the ultra-accelerators as known to those having ordinary skill in the art. Of course as described above, one or more ultra-accelerators may be used in particular embodiments of the bonding material as well as one or more accelerators. More particularly, particular embodiments include the following ranges as examples for the amount of the identified ultra-accelerators and accelerators that have been tested: ZBEC, 1.8-7.4 phr; ZIPX, 0.25 - 4 phr; ZEPC, 1.85-3.7 phr; AS100, 2.0-4.0 phr; DBA, 0.4-1.6 phr; DPG, 0.4-2; and DCHA, 0.4-1.7.

In addition to the solvent-swollen diene rubber component and the accelerator package, particular embodiments of the bonding material may further include one or more tackifiers. Tackifiers are represented by a variety of resins of many chemical types and physical properties. They are usually quite soluble in aliphatic and aromatic hydrocarbons as well as many other typical organic solvents. Although there are many useful tackifiers that are well known to one having ordinary skill in the art, an example of a useful tackier is DUREZ 30900, an octyl phenol formaldehyde resin available from Durez Corporation with offices in Kenton, Ohio. Typical resins that are marketed as tackifiers include, for example, rosins, modified resins, polymerized petroleum hydrocarbons, and polymerized terpenes.

Other materials that may be added to particular embodiments of the bonding material include, for example, reinforcement fillers such as carbon black, inorganic fillers (e.g., so-called white filler) and combinations thereof. The inorganic filler used as reinforcing filler may constitute all or only part of the total reinforcing filler, being mixed, for example, with carbon black.

Reinforcing inorganic filler is understood to mean an inorganic or mineral filler, whatever its color and its origin (natural or synthetic), that is capable, on its own, without any means other than an intermediate coupling agent, of reinforcing a rubber composition intended for the manufacture of tires; *i.e.,* is capable of replacing all or at least a portion of a conventional tire-grade carbon black filler in its reinforcement function. These materials may be added in particular embodiments up to, for example, about 60 phr.

In addition to the diene rubber and other materials disclosed above, particular embodiments of the bonding material may further include all or part of the additives that may typically be used in rubber compositions intended as bonding materials. Such additives may include, for example, plasticizers, extender oils, pigments and/or protective agents that include antioxidants and antiozonants. There may also be associated with the reinforcing inorganic filler, if necessary, a conventional non-reinforcing white filler, such as for example, particles of clay, bentonite, talc, chalk, kaolin or titanium oxides.

The rubber may be added to the solvent in small cut-up pieces or flakes to help speed up the time it takes to have the rubber swell. The other materials may be added at the same time or later, up to just before the bonding material is used. Stirring the rubber in the solvent helps speed the rubber swelling process. When the rubber is sufficiently swollen, the individual pieces of rubber are incorporated into the solvent with the other solids such that the individual pieces of rubber are typically no longer apparent, thereby providing the thickened bonding material.

An exemplary bonding material formulation is provided in Table 2. The solids content of this exemplary bonding material is 8 wt. % of the bonding material and the solvent content is 92 wt. %. It may be noted that the shelf life of many of the embodiments of the bonding materials extends for at least several months even with the accelerators and ultra-accelerators added. The least stable of the bonding materials, which did not have a shelf life of at least several months, were those containing the AS 100 ultra-accelerator.

**Table 2 - Exemplary Bonding Material Formulation**

| Component | Purpose | Quantity, phr |
|---|---|---|
| Diene Rubber | Natural Rubber | 100 |
| Zinc Stearate | Activator | 2 |
| Hexane | Solvent to swell rubber | 1220 |
| ZBEC, | Ultra-accelerator | 2 |
| MBTS | Accelerators | 0.5 |
| DPG, | Accelerators | 0.5 |
| DUREZ 30900 | Tackifier resin | 1 |

Particular embodiments of the present invention further include tires having a patch bonded to an interior surface of the tire, the patch bonded to the interior surface of the tire with the bonding material disclosed herein. The patch may be a reinforced patch comprising layers of rubber and textile reinforcement or metal cord reinforcement as known to one having ordinary skill in the art. The patch may further include electronics for monitoring the performance and/or condition of the tire. Such electronic devices are well known to those having ordinary skill in the art and are often attached to a tire using an adhesive. Particular embodiments of the present invention include a tire having an electronic device attached to the interior surface of the tire using the bonding material disclosed above.

The invention is further illustrated by the following examples, which are to be regarded only as illustrations and not delimitative of the invention in any way.

### Example 1

This example illustrates the surprising bonding strength using a bonding material having solvent-swollen rubber and an ultra-accelerator to bond vulcanized surfaces. The bonding material formulations F**1** - F**5** were prepared with the materials shown in Table 3 by the process described below.

**Table 3 - Bonding Material Formulations and Shear Test Results**

| | **F1** | **F2** | **F3** | **F4** | **F5** | **F6** | **F7** |
|---|---|---|---|---|---|---|---|
| | **phr** | **phr** | **phr** | **phr** | **phr** | | |
| Natural Rubber | 100 | 100 | 100 | 100 | 100 | Commercial Formulat'n | |
| Tackifier Resin (DUREZ 30900) | 1 | 1 | 1 | 1 | 1 | | |
| ZBEC, ultra-accelerator | 2 | 0 | 2 | 2 | 2 | | |
| AS100, ultra-accelerator | 0 | 4 | 2 | 2 | 2 | | |
| DCHA - accelerator | 0 | 0 | 0 | 0 | 0.85 | | |
| DPG-accelerator | 0.5 | 0 | 0 | 0 | 0 | | |
| DBA - accelerator | 0 | 1.6 | 0 | 1.6 | 0 | | |
| MBTS - accelerator | 0.5 | 0 | 0 | 0 | 0 | | |
| Zinc stearate | 2 | 2 | 2 | 2 | 2 | | |
| Hexane | 1220 | 1220 | 1220 | 1220 | 1220 | | |
| Commercial rubber cement | | | | | | SBC | 760 |
| Commercial uncured gray gum | | | | | | BG | TG |
| Shear Test (N), Method **A** Samples | 184 | 183 | 204 | 210 | 210 | | |
| Shear Test (N), Method **B** Samples | 220 | 180 | 182 | 210 | 228 | 201 | 210 |

The natural rubber was cut up into small pieces and then added with the other ingredients shown in Table **3** to a jar containing the hexane. The jar was sealed with a screw cap and placed on its side on a pair of rotating rollers that mixed the materials in the sealed jar by rolling the jar on its side for about 4 hours. The mixing was complete when the rubber had swelled sufficiently so that the material in the jar had a smooth consistency with no visible rubber pieces.

The commercial formulation F**6** used the Rema TipTop rubber cement product named Special Blue Cement (SBC) and an uncured gum product called REMA BLUE GUM (BG), also available from Rema TipTop of New Jersey. The commercial formulation F7 used the Tech International 760 rubber cement product and an uncured Tech gray gum from Tech International of Johnstown, Ohio.

Under Method **A** used for preparing the bonded samples, cured rubber samples were prepared by cutting sheets into 1 cm x 7 cm strips and then buffed using a buffing wheel. The formulations were then spread on 2 cm of one end of the strips and allowed to dry for about 10 minutes. The samples were then pressed together and stitched using manual pressure. After stitching, the samples were placed under 10 pounds of weight for 48 hours. Therefore, samples prepared by Method **A** provided test strips of cured rubber having surfaces bonded only with the bonding formulation therebetween.

Under Method **B** used for preparing the bonded samples, cured rubber samples were prepared by cutting sheets into 1 cm x 7 cm strips and then buffed using a buffing wheel. The formulations were then applied to 2 cm of one end of the strips and dried for 10 minutes. The formulations F**6** and F**7** were the commercial formulations SBC and 760 rubber cement as shown in Table 3 applied to test strips for testing. The uncured rubber, either Tech gray gum or REMA BLUE GUM was then applied over the formulation on one of the strips of each pair of strips. The strip with the uncured rubber was then applied over another strip with the formulation but without the gum and pressed and stitched using manual pressure. The samples were then placed under 10 pounds of weight for 48 hours. Therefore, samples prepared by Method **B** provided test strips of cured rubber having surfaces bonded in the following order: a first cured layer of rubber, a layer of formulation, a layer of uncured rubber, a layer of formulation, a second cured layer of rubber.

The test samples were measured for shear strength using an INSTRON 1125 machine. The shear force in Newtons was measured for each of the test specimens at a temperature of 23 °C. The results are provided in Table **3**.

### Example 2

To show the evaporative rate of the solvent from the bonding material, a formulation of bonding material was prepared with 10 wt. % solids using the methods described above. The solids included only natural rubber and the other materials added in the formulations above.

A tare weight was obtained for a rubber test sample and then 0.1 mL of the bonding material was spread on the test sample. The test sample was immediately placed on a precision balance and the weight of the sample was measured over time. The tare weight was subtracted and the weights of the adhesive were then recorded. The weights of the adhesive are provided in Table **4**.

**Table 4 - Weight of Adhesive vs. Time**

| Minutes | 1 | 3 | 5 | 10 | 15 | 20 | 30 |
|---|---|---|---|---|---|---|---|
| Weight (g) | .033 | .015 | .012 | .011 | .0105 | .01 | .01 |

This example shows that after about 10 minutes, much of the solvent has evaporated. The bonding material is still slightly tacky after 10 minutes of evaporation. Therefore, in particular embodiments, a step of waiting for about 10 minutes is included in the method for bonding vulcanized surfaces.

### Example 3

This example demonstrates the effect of cure conditions of the shear test. Adhesion continues to increase at room temperature between 1 and 31 days. In this example, bonding material was prepared and tested according to the Method **A** shown in Example **1** using the materials of F**1** as shown in Table 3**.** However, the cure time and temperature was varied from those of Example **1** to demonstrate the effect of cure conditions.

The conditions of the cure and the shear test results are shown in Table **5**.

**Table 5 - Cure times vs. Shear Test Results**

| Time | 1 day | 2 days | 3 days | 7 days | 31 days | 90 min | 6 hrs | 90 min | 6 hrs |
|---|---|---|---|---|---|---|---|---|---|
| T, °C | 23 °C | 23 °C | 23 °C | 23 °C | 23 °C | 125 °C | 125 °C | 60 °C | 60 °C |
| Shear, N | 145 | 170 | 180 | 200 | 210 | 200 | 175 | 160 | 150 |

Note that after 7 days of curing at ambient temperature, the adhesion is equal to that of a sample that is cured for 90 minutes at 125 °C.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention.. Ranges that are described as being "between a and b" are inclusive of the values for "a" and "b."

The foregoing description is provided for the purpose of illustration only and should not be construed in a limiting sense. Only the language of the following claims should limit the scope of this invention.

## Claims

1. A method for bonding surfaces of vulcanized diene rubber components, the method comprising the steps of:
applying a bonding material to a surface of a first vulcanized rubber component, wherein the bonding material comprises a solvent-swollen diene rubber mixed with one or more ultra accelerators;
positioning a surface of a second vulcanized rubber component to oppose the surface of the first vulcanized rubber component with the bonding material between the opposing surfaces;
bonding the opposing surfaces through the bonding material therebetween.

2. The method of claim 1, before the step of positioning a surface of a second vulcanized rubber component, the method further comprising:
applying the bonding material to the surface of the second vulcanized rubber component.

3. The method of claim 1, wherein the step of bonding the opposing surfaces comprises:
maintaining the opposing surfaces having the bonding material therebetween at a temperature of between 15 °C and 30 °C.

4. The method of claim 1, wherein the step of bonding the opposing surfaces comprises:
heating the opposing surfaces having the bonding material therebetween to a temperature of between 75 °C and 175 °C.

5. The method of claim 1, wherein the solvent-swollen diene rubber is solvent-swollen natural rubber.

6. The method of claim 1, wherein the solvent-swollen diene rubber is solvent-swollen highly unsaturated diene rubber.

7. The method of claim 1, wherein the bonding material is devoid of a crosslinking agent that is capable of vulcanizing the interface layer alone.

8. The method of claim 1, wherein the solvent is an aliphatic hydrocarbon having between 4 and 10 carbon atoms.

9. The method of claim 1, wherein the solvent is hexane.

10. The method of claim 1, wherein the ultra-accelerant is selected from TMTD, ZIPX, ZBEC, TBzTD, di-isopropyl xanthogen polysulfide or combinations thereof.

11. The method of claim 1, wherein bonding material further comprises an accelerant.

12. The method of claim 11, wherein the accelerant is selected from DCHA, DPG, DBA, MBTS or combinations thereof.

13. The method of claim 1, wherein the first component is a patch having a vulcanized diene rubber bonding surface and the second component is a tire having an interior surface, wherein the bonding surface of the patch is bonded to the interior surface of the tire through the bonding material therebetween.

14. The method of claim 13, wherein the patch comprises electronics for monitoring a condition of the tire.

15. A pneumatic tire, comprising:
a patch bonded to an interior surface of the tire by the method of claim 13.

## Patentansprüche

1. Verfahren zum Verkleben von Flächen von vulkanisierten Dienkautschukzusammensetzungen, wobei das Verfahren die folgenden Schritte umfasst:
Aufbringen eines Klebematerials auf eine Fläche einer ersten vulkanisierten Kautschukkomponente, wobei das Klebematerial einen durch Lösungsmittel aufgequollenen Dienkautschuk umfasst, der mit einem oder mehreren Ultrabeschleuniger gemischt ist;
Positionieren einer Fläche einer zweiten vulkanisierten Kautschukkomponente, um der Fläche der ersten vulkanisierten Kautschukkomponente gegenüberzuliegen, wobei das Klebematerial sich zwischen den gegenüberliegenden Flächen befindet;
Verkleben der gegenüberliegenden Flächen durch das Klebematerial zwischen diesen.

2. Verfahren nach Anspruch 1, wobei das Verfahren vor dem Schritt des Positionierens einer Fläche einer zweiten vulkanisierten Kautschukkomponente weiterhin Folgendes umfasst:
Aufbringen des Klebematerials auf die Fläche der zweiten vulkanisierten Kautschukkomponente.

3. Verfahren nach Anspruch 1, wobei der Schritt des Verklebens der gegenüberliegenden Flächen Folgendes umfasst:
Halten der gegenüberliegenden Flächen mit dem Klebematerial zwischen diesen bei einer Temperatur zwischen 15 °C und 30 °C.

4. Verfahren nach Anspruch 1, wobei der Schritt des Verklebens der gegenüberliegenden Flächen Folgendes umfasst:
Erhitzen der gegenüberliegenden Flächen mit dem Klebematerial zwischen diesen auf eine Temperatur zwischen 75 °C und 175 °C.

5. Verfahren nach Anspruch 1, wobei der durch Lösungsmittel aufgequollene Dienkautschuk ein durch Lösungsmittel aufgequollener Naturkautschuk ist.

6. Verfahren nach Anspruch 1, wobei der durch Lösungsmittel aufgequollene Dienkautschuk ein durch Lösungsmittel aufgequollener, hoch ungesättigter Dienkautschuk ist.

7. Verfahren nach Anspruch 1, wobei es dem Klebematerial an einem Vernetzungsmittel fehlt, das die Grenzflächenschicht alleine vulkanisieren kann.

8. Verfahren nach Anspruch 1, wobei das Lösungsmittel ein aliphatischer Kohlenwasserstoff mit zwischen 4 und 10 Kohlenstoffatomen ist.

9. Verfahren nach Anspruch 1, wobei das Lösungsmittel Hexan ist.

10. Verfahren nach Anspruch 1, wobei der Ultrabeschleuniger aus TMTD, ZIPX, ZBEC, TBzTD, Diisopropylxanthogenpolysulfid oder Kombinationen davon ausgewählt ist.

11. Verfahren nach Anspruch 1, wobei das Klebematerial weiterhin einen Beschleuniger umfasst.

12. Verfahren nach Anspruch 11, wobei der Beschleuniger aus DCHA, DPG, DBA, MBTS oder Kombinationen davon ausgewählt ist.

13. Verfahren nach Anspruch 1, wobei die erste Komponente ein Flicken mit einer vulkanisierten Dienkautschuk-Klebefläche ist und die zweite Komponente ein Reifen mit einer Innenfläche ist, wobei die Klebefläche des Flickens mit der Innenfläche des Reifens durch das Klebematerial zwischen diesen verklebt wird.

14. Verfahren nach Anspruch 13, wobei der Flicken Elektronik zur Überwachung eines Zustands des Reifens umfasst.

15. Luftreifen, der Folgendes umfasst:
einen Flicken, der durch das Verfahren nach Anspruch 13 mit einer Innenfläche des Reifens verklebt wurde.

## Revendications

1. Procédé permettant d'assembler des surfaces de composants en caoutchouc de diène vulcanisé, lequel procédé comporte les étapes suivantes :
- appliquer un matériau d'assemblage sur une surface d'un premier composant en caoutchouc vulcanisé, lequel matériau d'assemblage comprend un caoutchouc de diène gonflé au solvant et mélangé avec un ou plusieurs ultra-accélérateurs ;
- placer une surface d'un deuxième composant en caoutchouc vulcanisé en opposition avec la surface du premier composant en caoutchouc vulcanisé, de telle manière que le matériau d'assemblage se trouve entre les surfaces en opposition ;
- et assembler les surfaces en opposition par l'intermédiaire du matériau d'assemblage qui se trouve entre elles.

2. Procédé conforme à la revendication 1, lequel procédé comporte en outre, avant l'étape de positionnement d'une surface d'un deuxième composant en caoutchouc vulcanisé, une étape consistant à appliquer du matériau d'assemblage sur la surface du deuxième composant en caoutchouc vulcanisé.

3. Procédé conforme à la revendication 1, dans lequel l'étape d'assemblage des surfaces en opposition comporte le fait de maintenir les surfaces en opposition, avec le matériau d'assemblage entre elles, à une température de 15 à 30 °C.

4. Procédé conforme à la revendication 1, dans lequel l'étape d'assemblage des surfaces en opposition comporte le fait de chauffer les surfaces en opposition, avec le matériau d'assemblage entre elles, à une température de 75 à 175 °C.

5. Procédé conforme à la revendication 1, dans lequel le caoutchouc de diène gonflé au solvant est un caoutchouc naturel gonflé au solvant.

6. Procédé conforme à la revendication 1, dans lequel le caoutchouc de diène gonflé au solvant est un caoutchouc de diène fortement insaturé, gonflé au solvant.

7. Procédé conforme à la revendication 1, dans lequel le matériau d'assemblage est dépourvu d'un agent de réticulation qui serait capable à lui seul de vulcaniser la couche d'interface.

8. Procédé conforme à la revendication 1, dans lequel le solvant est un hydrocarbure aliphatique comportant de 4 à 10 atomes de carbone.

9. Procédé conforme à la revendication 1, dans lequel le solvant est de l'hexane.

10. Procédé conforme à la revendication 1, dans lequel l'ultra-accélérateur est choisi parmi les TMTD, ZIPX, ZBEC, TBzTD et polysulfures de xanthogénate de di-isopropyle, et leurs combinaisons.

11. Procédé conforme à la revendication 1, dans lequel le matériau d'assemblage comprend en outre un accélérateur.

12. Procédé conforme à la revendication 11, dans lequel l'accélérateur est choisi parmi les DCHA, DPG, DBA et MBTS, et leurs combinaisons.

13. Procédé conforme à la revendication 1, dans lequel le premier composant est une pièce dotée d'une surface d'assemblage en caoutchouc de diène vulcanisé et le deuxième composant est un pneumatique comportant une surface interne, et dans lequel la surface d'assemblage de la pièce est assemblée à la surface interne du pneumatique par l'intermédiaire du matériau d'assemblage placé entre elles.

14. Procédé conforme à la revendication 13, dans lequel la pièce comprend des composants électroniques destinés à surveiller l'état du pneumatique.

15. Pneumatique comprenant une pièce assemblée à sa surface interne par un procédé conforme à la revendication 13.
